Europäisches Patentamt

European Patent Office

Office européen des brevets

(11) Veröffentlichungsnummer: **0 065 619**
A1

## EUROPÄISCHE PATENTANMELDUNG

(21) Anmeldenummer: 82101081.6

(22) Anmeldetag: 13.02.82

(51) Int. Cl.³: **B 32 B 27/18**
**B 32 B 27/08**

(30) Priorität: 09.05.81 DE 8113747 U

(43) Veröffentlichungstag der Anmeldung:
01.12.82 Patentblatt 82/48

(84) Benannte Vertragsstaaten:
AT CH DE FR GB IT LI NL SE

(71) Anmelder: Röhm GmbH
Kirschenallee Postfach 4242
D-6100 Darmstadt 1(DE)

(72) Erfinder: Lehmann, Jürgen, Dr. Dipl.-Phys.
Taubenstrasse 18
D-6107 Reinheim 5(DE)

(72) Erfinder: Vetter, Heinz, Dr.-Ing. Dipl.-Ing.
Taunusstrasse 92
D-6101 Rossdorf 1(DE)

(72) Erfinder: Arnold, Wolfang
Im Entich 6
D-6140 Bensheim 1(DE)

(54) Koextrudiertes lichtdurchlässiges Kunststoffprofil.

(57) Zur Dickenkontrolle einzelner Schichten bei der Herstellung von lichtdurchlässigen Kunststoffprofilen aus wenigstens zwei Schichten durch Koextrusion von wenigstens zwei verschiedenen, lichtdurchlässigen thermoplastischen Formmassen durch eine gemeinsame Extrusionsdüse wird wenigstens eine Formmasse, die einen im sichtbaren Bereich fluoreszierenden Farbstoff enthält, und wenigstens eine weitere Formmasse ohne diesen Farbstoff eingesetzt und das koextrudierte Kunststoffprofil nach dem Verlassen der Extrusionsdüse mit einer den fluoreszierenden Farbstoff anregenden Strahlung bestrahlt, wobei aus der Stärke des Fluoreszenzlichtes die Dicke der den Fluoreszenzfarbstoff enthaltenden Schicht ermittelt werden kann.

EP 0 065 619 A1

## Koextrudiertes lichtdurchlässiges Kunststoffprofil

Bei der Herstellung von koextrudierten lichtdurchlässigen Kunststoffprofilen aus wenigstens zwei Schichten aus verschiedenen, extrudierbaren, lichtdurchlässigen Kunststoffen besteht die Schwierigkeit, die Dicke und Gleichmäßigkeit der beteiligten Kunststoffschichten durch Betrachtung der Oberfläche oder einer Schnittkante zu erkennen. Diese Schwierigkeit ist besonders groß, wenn die beteiligten Schichten gleichfarbig oder insbesondere farblos sind. Zwar zeigen unterschiedliche Kunststoffe oft ein verschiedenartiges Absorptionsverhalten bei bestimmten Wellenlängen, jedoch ist es bei dünnen Schichten schwierig, die Schichtdicke aus dem Absorptionsverlust einer durchtretenden Strahlung von einer solchen Wellenlänge hinreichend genau zu ermitteln.

Der Erfindung liegt die Aufgabe zugrunde, mehrschichtige, koextrudierte, lichtdurchlässige Kunststoffprofile herzustellen, bei denen die Dicke und Gleichmäßigkeit wenigstens einer der beteiligten Schichten leicht und sicher entweder in der Draufsicht oder an der Schnittkante festzustellen ist. Die gestellte Aufgabe wird durch die in den Ansprüchen gekennzeichneten Kunststoffprofile und das Verfahren zu ihrer Herstellung gelöst. Die Erfindung beruht auf der Einfärbung wenigstens einer Schicht mit einem im sichtbaren Bereich fluoreszierenden Farbstoff, der vorzugsweise im sichtbaren Bereich nicht absorbiert und durch UV-Strahlung zur Fluoreszenz angeregt wird. Das Fluoreszenzlicht tritt zum Teil durch die Oberfläche der Schicht nach außen und ist in der Draufsicht wahrnehmbar. Der übrige Teil des Fluoreszenzlichtes wird durch Totalreflexion in der Schicht weitergeleitet und tritt an den Schnittkanten aus. Während die durch die Oberfläche austretende Fluoreszenzlichtstrahlung der Schichtdicke proportional ist, hängt die an der Schnittkante austretende Lichtstärke zusätzlich von der Größe der bestrahlten Fläche ab. Ungleichmäßigkeiten in der fluoreszierenden Schicht sind meistens schon in der Draufsicht auf das bestrahlte Kunststoffprofil ohne weitere Hilfsmittel visuell zu erkennen. Für genauere Untersuchungen empfiehlt sich ein Lichtmeßgerät. Eine visuelle Betrachtung der Schnittkanten läßt das Profil der fluoreszierenden Schicht und die Gestalt der Grenzfläche zu der benachbarten, nicht fluoreszierenden Schicht visuell erkennen. Zur genauen Bestimmung der Schichtdicke aus der an der Kante auftretenden Fluoreszenzlichtstärke wird in der Regel ein Lichtmeßgerät verwendet, wobei sich die Schichtdicke aus der Intensität der einwirkenden Strahlung, des Fluoreszenzlichtes, der Konzentration des fluoreszierenden Farbstoffes und der Größe und Geometrie des untersuchten Probekörpers ergibt. Zweckmäßig stellt man eine Eichkurve auf, die diese Parameter zusammenfaßt.

Wenn das Kunststoffprofil aus mehr als zwei Schichten besteht, kann mehr als eine Schicht einen Fluoreszenzfarbstoff enthalten, jedoch dürfen diejenigen Schichten, deren Dicke und Gleichmäßigkeit ermittelbar sein sollen, nicht an eine

- 3. -

andere Schicht grenzen, die den gleichen Fluoreszenzfarbstoff in einer wirksamen Menge enthält. Gegebenenfalls können verschiedene Schichten unterschiedliche Fluoreszenzfarbstoffe enthalten, die ein unterscheidbares Fluoreszenzlicht aussenden oder durch verschiedenartige Strahlungen zur Fluoreszenz angeregt werden. Wenn das Kunststoffprofil mehrere fluoreszierende Schichten enthält, die durch nicht fluoreszierende Schichten getrennt sind, so gibt das in der Draufsicht wahrnehmbare Fluoreszenzlicht u.U. nur Auskunft über die Summe der Dicke der fluoreszierenden Schichten. Die trennende Schicht kann auf die fluoreszenzauslösende Strahlung absorbierend wirken, so daß bei einseitiger Bestrahlung nur eine der Fluoreszenzfarbstoff enthaltenden Schichten fluoresziert. In diesem Falle können zwei getrennte Schichten von beiden Seiten des Profils getrennt auf Gleichmäßigkeit untersucht werden.

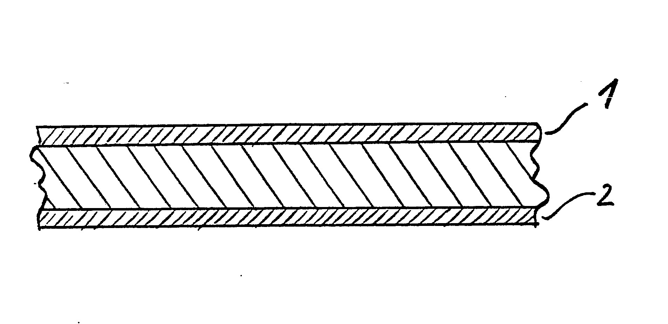

Bei der bevorzugten Ausführungsform der Erfindung gemäß der Figur, die einen Ausschnitt aus dem Querschnitt eines Kunststoffprofils darstellt, bildet eine fluoreszierende Schicht die Oberseite des Kunststoffprofils bzw. zwei solche Schichten (1, 2) die Außenseiten des Kunststoffprofils.

Geeignete, im sichtbaren Bereich vorzugsweise farblose Fluoreszenzfarbstoffe, die sich in thermoplastischen Formmassen homogen verteilen lassen, sind bekannt. Bevorzugt werden Farbstoffe, die durch UV-Strahlung im Bereich von 230 bis 380 nm anregbar sind und blaues Fluoreszenzlicht aussenden. Beispiele derartiger Fluoreszenzfarbstoffe sind Derivate von 4,4'-Bis-triazinylamino-stilben-2,2'-disulfonsäure, Cumarin, Bis-benzoxazolyl-Verbindungen, Bis-benzimidazolyl-

- 4 .-

Verbindungen, Benz-triazolen, Pyrazolinen, Naphthalsäureimiden und Bis-styryl-benzol. Wenn der Fluoreszenzfarbstoff nur zur Überwachung der Herstellung dient, braucht er
nur kurze Zeit beständig zu sein. Die Fluoreszenzfarbstoffe
werden zweckmäßigerweise in einer Konzentration von 1 bis
10.000 ppm, vorzugsweise 100 bis 1000 ppm (0,01 bis 0,1 %),
bezogen auf das Kunststoffgewicht, eingesetzt.

Im bevorzugten Falle sind alle Schichten des Kunststoffprofils
transparent und farblos. Die nicht fluoreszierende Schicht,
die in der Regel den gewichtsmäßig überwiegenden Kern des
Kunststoffprofils bildet, kann ein Vollprofil oder ein
Hohlprofil, beispielsweise ein Rohr oder eine Stegdoppelplatte sein. Die Schichtstärke kann, ohne Einrechnung etwaiger
Hohlräume, beispielsweise 1 bis 10 mm betragen, im Falle von
Mehrschichtfolien auch darunter. Die fluoreszierende Schicht
ist in der Regel weniger als 1 mm und vorzugsweise höchstens
0,1 mm dick. Dicken unterhalb von 0,001 mm für die fluoreszierende Schicht sind nicht mehr zweckmäßig, weil sie schwierig
zu erzeugen sind und der Fluoreszenzeffekt dann zu schwach
ist. Aus den oben schon diskutierten Gründen, aber auch zum
Schutz gegen Verwitterung, kann es zweckmäßig sein, die nicht
fluoreszierende Schicht mit einem UV-Absorber in üblichen
Mengen auszurüsten; geeignet sind z.B. Diphenylacrylnitrilsäureester, Benzophenone, Benztriazole wie 2-Hydroxy-5-
methyl-phenylbenztriazol. *)

Die äußere Schicht eines mehrschichtigen koextrudierten
Kunststoffprofils hat häufig die Aufgabe, die darunterliegende
Schicht vor Witterungseinflüssen zu schützen, und besteht
deshalb in der Regel aus einem hoch witterungsbeständigen

*) Die fluoreszierenden Schichten können UV-Absorber in
   solcher Art und Menge enthalten, daß der Fluoreszenzeffekt
   nicht aufgehoben wird.

- 5. -

Material. Bevorzugt sind Polymethylmethacrylat oder überwiegend aus Methylmethacrylat aufgebaute Kunststoffe. Diese Kunststoffe eignen sich manchmal auch als Haftvermittler für weitere aufzubringende, beispielsweise kratzfeste Beschichtungen. Die bevorzugten Kunststoffprofile gemäß der Erfindung enthalten daher eine oder zwei Oberflächenschichten aus den erwähnten Homo- oder Mischpolymerisaten des Methylmethacrylats, die den Fluoreszenzfarbstoff enthalten. Der Kern besteht vorzugsweise aus einer Schicht eines anderen Kunststoffes, wie z.B. Polycarbonat, das bevorzugt ist, oder Polyvinylchlorid, schlagzäh modifizierte Polymethacrylatkunststoffe, Polyäthylen, Polystyrol oder Styrol-Butadien-Mischpolymerisate. Es versteht sich von selbst, daß alle Schichten aus thermoplastischen, extrudierbaren Kunststoffen bestehen müssen.

Die Technik der Koextrusion verschiedener Kunststoffe, die in getrennten Extrudern aufgeschmolzen und in einer gemeinsamen Koextrusionsdüse zu einem mehrschichtigen Kunststoffprofil zusammengeführt werden, ist an sich bekannt und wird für die Zwecke der Erfindung in der üblichen Weise durchgeführt. Dabei wird wenigstens eine thermoplastische, extrudierbare, lichtdurchlässige Formmasse eingesetzt, die einen im sichtbaren Bereich fluoreszierenden Farbstoff enthält, während wenigstens eine weitere, davon verschiedene Formmasse ohne diesen Farbstoff eingesetzt wird. Zweckmäßigerweise wird hinter der Extrusionsdüse, jedenfalls vor der Stelle des austretenden Profilstranges, an der dieser in Abschnitte zerlegt oder aufgerollt wird, das kontinuierlich fließende Kunststoffprofil mit einer die Fluoreszenzstrahlung auslösenden Strahlung bestrahlt, so daß eventuelle Ungleich-

- 6.-

mäßigkeiten in der fluoreszierenden Schicht durch visuelle Beobachtung wahrgenommen werden können. Für genauere Untersuchungen kann laufend oder periodisch eine Schnittkante erzeugt und das dort austretende Fluoreszenzlicht gemessen werden.

- 7. -

Beispiel:
Herstellung von Polycarbonat(PC)-Tafeln mit guter Transparenz
und guten Witterungseigenschaften.

Die gute Witterungsbeständigkeit wird durch die Beschichtung
mit einem dünnen Film aus Polymethylmethacrylat (PMMA) erhalten. Damit die Zähigkeitseigenschaften der PC-Tafeln
weitgehend erhalten bleiben, soll die PMMA-Schicht nicht
dicker als 30 µm sein.

Eine glasklare PC-Bahn, 400 mm breit und 3 mm dick, wird aus
einer Koextrusionsdüse (Dreischichtdüse, siehe z.B. Mehrschichtdüsen in "Extrusionswerkzeuge für Kunststoffe",
W. Michaeli, Hanser Verlag 1979) bei einer Temperatur
von 270° am Düseneintritt mit 0,4 m/min ausgeformt und
gleichzeitig mit glasklarem PMMA von 220°C in der Düse
beschichtet. Zur Steuerung der Dickenverteilung der
PMMA-Schicht dient, wie üblich, ein einstellbarer Staubalken
in der Düse.

Dem PMMA-Granulat für die Speisung des PMMA-Extruders werden
vorher 0,02 % 2,5-Bis [5'-t-butylbenzoxazolyl(2')] thiophen,
Handelsname Uvitex OB ®, ein optischer Aufheller der
Fa. Ciba Geigy AG, zugemischt. Der Düsenaustritt ist weitgehend vom Tageslicht abgeschirmt. Die Oberfläche der austretenden Bahn wird durch einen Quecksilber-Hochdruck-Strahler
mit Schwarzglaskolben Typ HQV 125 W der Fa. Osram bestrahlt.
An der unterschiedlichen Fluoreszenz ist zu erkennen, ob die
PC-Bahn überall gleichmäßig mit PMMA beschichtet ist. Falls
dies nicht der Fall ist, wird der Massefluß mit dem Staubalken korrigiert. Die PMMA-Schichtdicke kann auf diese Weise
über eine Produktionszeit von mehreren Stunden im Bereich von
20 - 30 µm gehalten werden.

Schutzansprüche

1. Koextrudiertes lichtdurchlässiges Kunststoffprofil, bestehend aus wenigstens zwei Schichten aus verschiedenen, extrudierbaren, lichtdurchlässigen Kunststoffen,

dadurch gekennzeichnet,

daß wenigstens eine Schicht einen im sichtbaren Bereich fluoreszierenden Farbstoff enthält und daß wenigstens eine daran angrenzende koextrudierte Schicht von diesem Farbstoff frei ist.

2. Kunststoffprofil nach Anspruch 1, dadurch gekennzeichnet, daß die den fluoreszierenden Farbstoff enthaltende Schicht im wesentlichen aus Polymethylmethacrylat oder aus einem überwiegend aus Methylmethacrylat aufgebauten Kunststoff besteht.

3. Kunststoffprofil nach den Ansprüchen 1 und 2, dadurch gekennzeichnet, daß die den fluoreszierenden Farbstoff enthaltende Schicht weniger als 1 mm und vorzugsweise höchstens 0,1 mm dick ist.

4. Kunststoffprofil nach den Ansprüchen 1 bis 3, dadurch gekennzeichnet, daß die von dem fluoreszierenden Farbstoff freie Schicht aus Polycarbonat besteht.

# 0065619

## Europäisches Patentamt

## EUROPÄISCHER RECHERCHENBERICHT

EP 82 10 1081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-2 880.898 (U.A.NAVIKAS) *Patentanspruch; Spalte 2, Zeilen 9-15* | 1 | B 32 B 27/18 B 32 B 27/08 |
| A | FR-A-1 073 509 (M.M.L.BUFFET) *Seite 2, Zeilen 1,40-45,93,94* | 1 | |
| A | FR-A-2 104 771 (BAKELITE XYLONITE LIM.) *Seite 1, Zeilen 39,40; Seite 2, Zeilen 1-3; Seite 4; Seite 5, Zeilen 1-30; Seite 7, Zeilen 17-20; Seite 8, Zeilen 2-8* & DE - A - 2 132 723 | 1,2,4 | |

| | RECHERCHIERTE SACHGEBIETE (Int. Cl. 3) |
|---|---|
| | B 32 B |

Der vorliegende Recherchenbericht wurde für alle Patentansprüche erstellt.

| Recherchenort | Abschlußdatum der Recherche | Prüfer |
|---|---|---|
| DEN HAAG | 20-08-1982 | DE LA MORINERIE B.M. |